# EUROPEAN PATENT APPLICATION

(11) **EP 1 335 628 A2**
(43) Date of publication of application: **13.08.2003**
(21) Application number: 03250764.2
(22) Date of filing: 06.02.2003
(51) Int. Cl.: H04R 1/08, H04R 1/40, H04R 3/00

(54) **Camcorder**

(30) Priority: 09.02.2002 KR 2002007750
(71) Applicant: SAMSUNG ELECTRONICS CO., LTD., Suwon-City, Kyungki-do (KR)
(72) Inventor: Lee, Moo-soon, Suwon-city, Gyunggi-do (KR); Park, Bum-cheol, 554-1606 Dongyanggosok Apartment, Suwon-city, Gyunggi-do (KR)
(74) Representative: Geary, Stuart Lloyd

(57) **Abstract**

A camcorder is combinable with a plurality of sound acquiring units (100, 130). A first sound acquiring unit (100) is provided with a plurality of sound acquiring sections (102, 104), and a second sound acquiring unit (160) is provided with at least one sound acquiring section. A main body part outputs a control signal, which variably adjusts each signal level of sound signals acquired by the sound acquiring sections (102, 104) provided in the first sound acquiring unit, to the first sound acquiring unit, and to receive the sound signals adjusted by the control signal from the first sound acquiring unit. The first sound acquiring unit is detachable from the main body part. With the above construction, levels of noise produced when picking up a sound signal through an internal sound acquiring unit or noise produced by a motor operating a zoom lens (180) of the camcorder, may be minimized.

## Description

The present invention relates to a camcorder comprising a zoom lens and sound sensing means.

Generally, camcorders record and reproduce both audio and video signal together. The video images may be enlarged optically or electronically. However, no corresponding change in the recorded audio can be made.

In order to solve the above drawback, directional "zoom" microphones comprising variable-length gun-type directional micro-cells. By adjusting the directionality of the microphone using the "zoom" microphone, the recorded sound can be made to match the video.

When picking up sound using a "zoom" microphone, the output audio signal can be controlled in accordance with the position of the zoom lens. In other words, if the zoom lens is positioned in a telephoto position, the sound detected by the "zoom" microphone is recorded. However, if the zoom lens in a wide angle position, the sound detected by a less directional internal microphone is recorded. In this case, despite the use of the "zoom" microphone, the output sound quality becomes closer to the sound quality acquired by the use of the internal microphone alone.
However, due to noise from the camcorder's deck and zooming motor, the zoom microphone is unable to obtain as clean a sound input as intended.

In addition, when repeatedly moving the "zoom" microphone from the telephoto to wide angle modes while the camcorder is in use, the repeated step changes in the recorded sound further degrades the perceived sound quality.

A camcorder according to the present invention is characterised by the sound sensing means comprising a directional first microphone means and wide-angle or non-directional second microphone means and by means for combining and outputting the outputs of the first and second microphone means in proportions dependent on the zoom state of the zoom lens.

Preferably, the second microphone means comprises first and second microphones arranged respectively on left and right sides of the camcorder.

Preferably, the first and second microphone means are removable and the camcorder has third internal microphone means. More preferably, a detector is included for detecting whether the first and second microphone means are present or have been removed together with means responsive to the output of the detector to output the output of the third microphone means, instead of the output of said means for combining, if the first and/or second microphone means has been removed.

Preferably, the zoom lens is motor driven.

An embodiment of the present invention will now be described, by way of example, with reference to the accompanying drawings, in which:-
Figure 1 illustrates a camcorder according to the present invention;
Figure 2 is a block diagram of the camcorder of Figure 1;
Figure 3 is a detailed block diagram of the first sound acquiring unit shown in Figure 2;
Figure 4 is a cross-sectional view of an engaging structure of the first sound acquiring unit and a first connecting part; and
Figure 5 illustrates the operation of the level adjusting section of the camcorder of Figure 1.

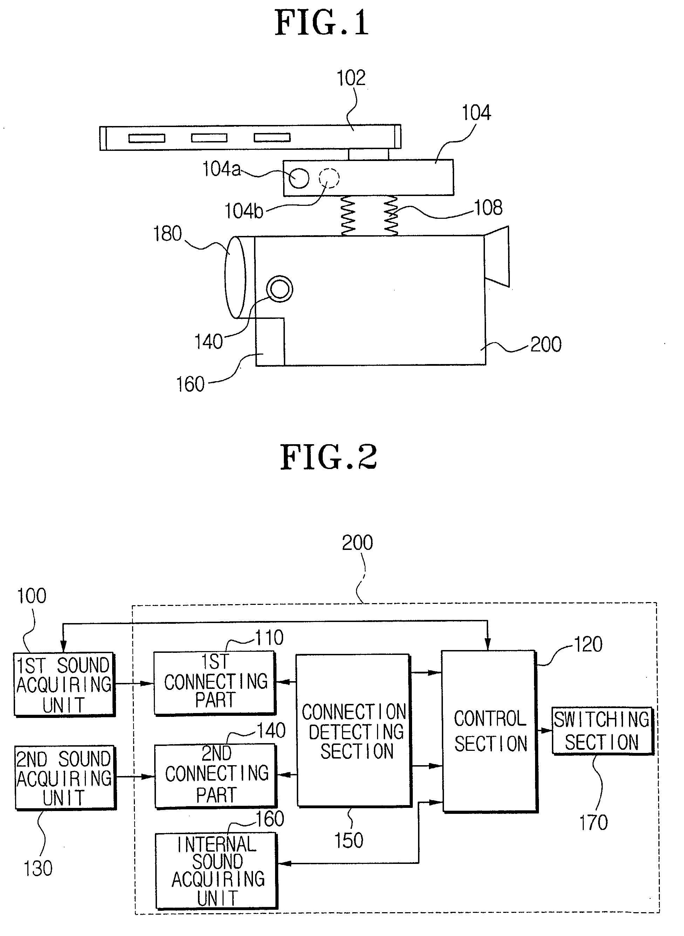

Referring to Figures 1 and 2, a camcorder includes a first sound acquiring unit 100, a second sound acquiring unit 130 and a main body 200. The first sound acquiring unit 100 is provided with a plurality of sound acquiring sections having different directionalities. The first sound acquiring unit 100 is detachable from the main body part 200.

The main body part 200 outputs a control signal to the first sound acquiring unit 100, which the adjusts the level of the audio signal from the sound acquiring section, and receives the adjusted audio signal the first sound acquiring unit 100.

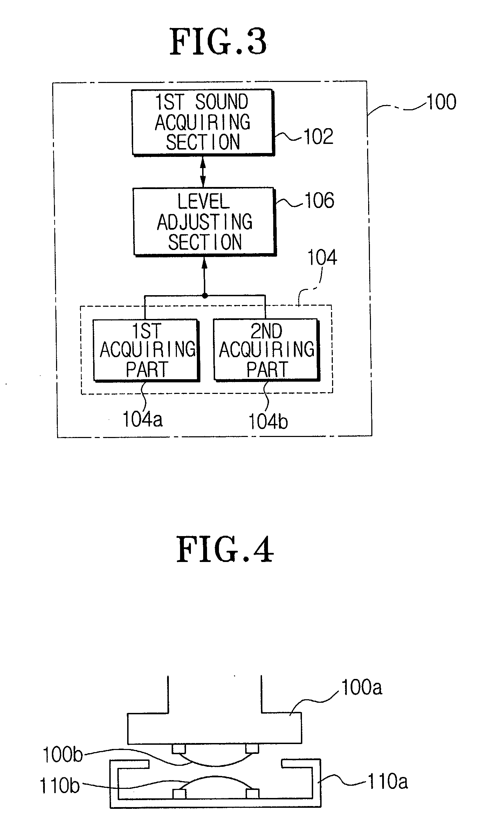

Referring to Figure 3, the first sound acquiring unit 100 includes a first sound acquiring section 102, a second sound acquiring section 104 and a level adjusting section 106. The first sound acquiring section 102 acquires sound with different sensitivities according to the position of the source of the sound.

The first sound acquiring section 102 is a directional gun-type directional microphone whose directionality is controlled by varying the length of the microphone. The first sound acquiring section 102 has an outer tube and an inner tube, telescopically located in the outer pipe so that its length can be adjusted by pulling the inner tube out of and pushing the inner tube into the outer tube.

The second sound acquiring section 104 is substantially omni-directional or has a substantially constant sensitivity over a large angular area, e.g. a hemisphere. The second sound acquiring section 104 includes a first acquiring part 104a and a second acquiring part 104b. The first acquiring part 104a has a higher sensitivity in one direction than in another direction. For example, if the sensitivity to sound received from the left is higher than that to sound received from the right, the first acquiring part 104a is a left microphone.

The second acquiring part 104b has the higher receiving sensitivity with respect to the other direction than with respect to the one direction. If the sensitivity to sound received from the right is higher than that to sound received from the left, the second acquiring part 104b is a right microphone. Preferably, the first and second acquiring parts 104a, 104b are arranged symmetrically with each other on the left and right sides of the camcorder.

The second sound acquiring section 104 is a non-directional microphone, and has a fixed sensitivity with respect to sounds from omni-directions. Accordingly, it is preferable to use the non-directional microphone to pick up natural sounds or ambient sound as well as a targeted sound. For example, the non-directional microphone may receive a conversation between an interviewer and a plurality of interviewees during an interview. In addition, the non-directional microphone may pick up sounds received from all directions without having to be moved.

The level adjusting section 106 adjusts and combines the outputs of the first and second sound acquiring sections 102, 104 according to a control signal from the control section 120 in the main body part 200 to synthesise an output audio signal.

The control section 120 outputs different control signals according to the position of a zoom lens 180 along its range of travel for setting the degree of zoom. The zoom lens 180 can move between telephoto and wide-angle positions. With the zoom lens 180 in the wide-angle position, it is possible to capture indoor scenes where the subjects of interest are close to the camera and outdoor panoramas. With the zoom lens 180 in the telephoto position, a subject positioned at a long distance is magnified.

The control section 120 outputs the control signal so as to adjust the contribution of the sound acquired by the first sound acquiring section 102 and the contribution of the sound acquired by the second sound acquiring section 104 according to the position of the zoom lens 180.

As the zoom lens 180 is driven to zoom in, the level adjusting section 106 responds to the control signal by increasing the contribution of the signal from the first sound acquiring section 102 and decreasing the contribution of the signal from the second sound acquiring section 104 to the output audio signal. Conversely, where the zoom lens 180 is driven to zoom out, the level adjusting section 106 responds to the control signal by decreasing the contribution of the signal from the first sound acquiring section 102 and increasing the contribution of the signal from the second sound acquiring section 104 to the output audio signal.

The audio signal output by the level adjusting section 106 is thus synthesized by combining the outputs of the first and second sound acquiring sections 102, 104 in proportions dependent on the position of the zoom lens 180.

The main body part 200 further includes a first connecting part 110, a second connecting part 140, a connection detecting section 150, an internal microphone 160 and a switching section 170.

The first sound acquiring unit 100 is detachable from the first connecting part 110 and the first connecting part includes a receiving unit for receiving the first audio signal from the first sound acquiring unit 100.

Referring to Figure 4, the first sound acquiring unit 100 is formed with a foot 100a which is detachable from the first connecting part 110. The first connecting part 110 is formed with a shoe 110a which receives the foot 100a to mount the first sound acquiring unit 100. The foot 100a of the first sound acquiring unit 100 is inserted onto the shoe 110a of the first connecting part 110.

In addition, the foot 100a and the shoe 110a include first and second terminals 100b, 110b respectively, which contact each other to form an electrical connection when the foot 100a is received in the shoe 110a.

The first connecting part 110 includes a damper member 108 to isolate the first sound acquiring unit 100 from vibrations produced when the camcorders deck or the zoom lens 180 are operated in the main body part 200. The damper member 108 is made of rubber or PVC to absorb vibrations from the main body part 200.

Although Figure 4 shows the structure of the first sound acquiring unit 100 and the first connecting part 110 in a connecting structure by way of the example, Figure 4 is not limited to the described structure. For example, the first sound acquiring unit 100 may be mounted onto the first connecting part 110.

The second connecting part 140 is connected to the second sound acquiring unit 130 and includes a receiving unit to receive a second sound signal from the second sound acquiring unit 130. The second connecting part 140 and the second sound acquiring unit 130 include complementary terminals to allow for electrical connection therebetween. The second connecting part 140 includes a built-in jack to allow the second sound acquiring unit 130 to be connected to the second connecting part 140.

The connection detection section 150 detects the connection state between the first and second sound acquiring units 100, 130 and the control section 120 controls the switching section 170 to cause the first and second audio signals of the first and second sound acquiring units 100, 130 to be selectively output.

The switching section 170 selectively outputs the first and second sound signals in accordance with a switching selecting signal of the control section 120. The switching section 170 may be achieved either through a hardware device, using a logic device, or through software technology.

The internal sound acquiring unit 160 is built in the main body part 200 and generally uses an omni-directional microphone. The internal sound acquiring unit 160 includes a left microphone (not shown) for sensing sound received from the left and a right microphone (not shown) for sound received from the right. If the first and second sound acquiring units 100, 130 are not detected after the detection of the connection detecting section 150, the control section 120 controls so that the sound signal acquired by the internal sound acquiring unit 160 built into the main body part 200 is output.

Generally, the first or second sound acquiring unit 100, 130 is referred to as an external microphone, while the internal sound acquiring unit 160 is referred to as an internal microphone. If at least one external microphone is detected, the control section 120 controls the operation of the camcorder so that the signal from the internal microphone is blocked or disabled so that the sound signal received from the external microphone is output.

If both of the first and second sound acquiring units 100, 130 are detected by the connection detecting section 150, the control section 120 controls the operation of the camcorder so that the first sound signal acquired by the first sound acquiring unit 100 may be output first. The switching section 170 is switched to the first sound acquiring unit 100 to output the first sound signal in accordance with the switching signal of the control section 120.

The level adjusting section 106 adjusts a signal level with respect to each sound acquired by the first sound acquiring unit 100, in response to the position of the zoom lens 180 moving between the telephoto position and the wide-angle position. If the zoom lens 180 is driven to the telephoto position, the sound is picked-up by the directional microphone of the first sound acquiring section 102. If the zoom lens 180 is driven to the wide-angle position, the sound is picked-up by the non-directional microphone of the second sound acquiring section 104.

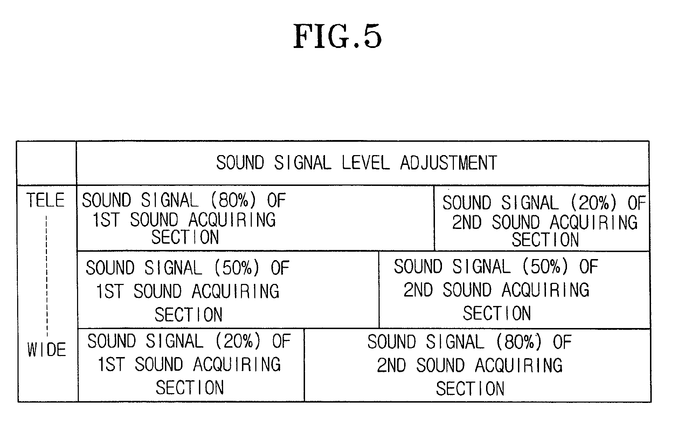

Referring to Figure 5, the level adjusting section 106 adjusts the signal level with respect to sounds acquired by the first and second sound acquiring sections 102, 104 in response to the driving position of the zoom lens 180. For example, with the zoom lens 180 in the telephoto position, the contribution of the sound acquired by the first sound acquiring section 102 is set to 80% and contribution of the sound acquired by the second sound acquiring section 104 is set to 20%.

When the zoom lens 180 is in the wide-angle position, contribution of the sound acquired by the second sound acquiring section 104 is set to 80% and the contribution of the sound acquired by the first sound acquiring section 102 is set to 20%.

If both of the first and second sound acquiring units 100, 130 are detected by the connection detecting section 150, the control section 120 controls the operation of the camcorder so that the second sound signal acquired by the second sound acquiring unit 130 is output first.

The switching section 170 is switched to the second sound acquiring unit 130 to output the second sound signal in accordance with the switching selecting signal of the control section 120. The second sound acquiring unit 130 may be used with an electrical connection to a wire microphone (such as a microphone used for karaoke as the second connecting part 140). In addition, the second sound acquiring unit 130 as a directional microphone may pick up a sound of a particular directionality, in accordance with the position of a sound source.

As described above, if the first and second sound acquiring units 100, 130 are connected to the main body part 200, by picking up a sound signal from one of the first and second sound acquiring units 100, 130, two types of sound signals are prevented from being simultaneously inputted, thereby preventing an overlapping of the sound signals.

With the camcorder combinable with a plurality of sound acquiring units according to the present invention, when connecting an external sound acquiring unit to the main body of the camcorder, an internal sound acquiring unit is switched off, and the external sound acquiring unit is operated first, thereby minimizing a level of noise produced when picking up the sound signal through the internal sound acquiring unit or the noise produced by a motor operating the zoom lens. In addition, if the plurality of sound acquiring units are coupled to the main body, simultaneous input of two types of sound signals are prevented because the sound acquiring units are operated according to a given priority. As a result, the overlapping of the signals is prevented.

## Claims

1. A camcorder comprising a zoom lens (180) and sound sensing means (102, 104), **characterised by** the sound sensing means comprising a directional first microphone means (102) and wide-angle or non-directional second microphone means (104) and by means (106) for combining and outputting the outputs of the first and second microphone means (102, 104) in proportions dependent on the zoom state of the zoom lens (180).

2. A camcorder according to claim 1, wherein the second microphone means (104) comprises first and second microphones (104a, 104b) arranged respectively on left and right sides of the camcorder.

3. A camcorder according to claim 1, wherein the first and second microphone means (102, 104) are removable and the camcorder has third internal microphone means (140).

4. A camcorder according to claim 3, including a detector (150) for detecting whether the first and second microphone means (102, 104) are present or have been removed and means (120) responsive to the output of the detector (150) to output the output of the third microphone means (140), instead of the output of said means (106) for combining, if the first and/or second microphone means (102, 104) has been removed.

5. A camcorder according to any preceding claim, including a motor for driving the zoom lens so as to changes its zoom state.

6. A sound acquiring apparatus, comprising:
a first sound acquiring section to acquire a sound with different levels of sensitivity according to a position of a sound source;
a second sound acquiring section to acquire a sound with the same level of sensitivity irrespective of the position of the sound source; and
a level adjusting section to variably adjust and synthesize a signal level of the sound acquired by the first sound acquiring section and a signal level of the sound acquired by the second sound acquiring section in accordance with a control signal inputted from an exterior, to output a synthesized sound signal.

7. The sound acquiring apparatus as claimed in claim 6, wherein the second sound acquiring section comprises:
a first acquiring part having a higher receiving sensitivity with respect to a first direction than a second direction; and
a second acquiring part having a higher receiving sensitivity with respect to the second direction than the first direction.

8. A camcorder, comprising:
a first sound acquiring unit having a plurality of sound acquiring sections; a second sound acquiring unit having at least one sound acquiring section; and
a main body part to output a control signal, which variably adjusts each signal level of sound signals acquired by the sound acquiring sections provided in the first sound acquiring unit, to the first sound acquiring unit, and to receive the sound signal adjusted by the control signal from the first sound acquiring unit, wherein
the first sound acquiring unit is detachable from the main body part.

9. The camcorder as claimed in claim 8, wherein the first sound acquiring unit comprises:
a first sound acquiring section to acquire a sound with different levels of sensitivity according to a position of a sound source;
a second sound acquiring section to acquire a sound with the same level of sensitivity irrespective of the position of the sound source; and
a level adjusting section to variably adjust and synthesize a signal level of the sound acquired by the first sound acquiring section and a signal level of the sound acquired by the second sound acquiring section in accordance with the control signal inputted from the main body part, to output a synthesized sound signal.

10. The camcorder as claimed in claim 9, wherein the first sound acquiring unit comprises:
a first acquiring part having a higher receiving sensitivity with respect to a first direction than a second direction; and
a second acquiring part having a higher receiving sensitivity with respect to the second direction than the first direction.

11. The camcorder as claimed in claim 8, wherein the main body part comprises:
a first connecting part connected to the first sound acquiring unit, and having a receiving unit to receive a first sound signal from the first sound acquiring unit; and
a control section to output the control signal to the first sound acquiring unit, wherein the control signal variably adjusts each signal level of the respective sound signal acquired by the first sound acquiring unit according to a driving position of a zoom lens provided in the main body part.

12. The camcorder as claimed in claim 11, wherein the main body part comprises:
a second connecting part connected to the second sound acquiring unit, and having a receiving unit to receive a second sound signal from the second sound acquiring unit; and
a connection detecting section to detect whether the first and second connecting parts are connected to the first and second sound acquiring units, respectively, wherein
the control section controls the camcorder so that the first and second sound signals are selectively outputted when both the first and second sound signals are detected by the connection detecting section.

13. The camcorder as claimed in claim 12, further comprising:
a switching section to selectively output the first and second sound signals in accordance with a selecting signal of the control section.

14. The camcorder as claimed in claim 13, wherein the control section controls the switching section so that the first sound signal acquired by the first sound acquiring unit is outputted when both the first and second sound signals are detected by the connection detecting section.

15. The camcorder as claimed in claim 13, wherein the control section controls the switching section so that the second sound signal acquired by the second sound acquiring unit is outputted when both the first and second sound signals are detected by the connection detecting section.

16. The camcorder as claimed in claim 11, wherein the first connecting part comprises:
a damper member to prevent vibration produced by the main body part from being transmitted to the first sound acquiring unit.

17. The camcorder as claimed in claim 9, wherein the first sound acquiring section is a gun-type microphone to regulate a directionality thereof by varying a length of the microphone.

18. The camcorder as claimed in claim 9, wherein the second sound acquiring section is a non-directional microphone having a fixed sensitivity with respect to sounds from omni -directions, to pick up natural, surrounding, and targeting sounds.

19. The camcorder as claimed in claim 11, further comprising:
a guide boss provided in the first sound acquiring unit and detachably connected to the first connecting part; and
a guide grove provided in the first connecting part to mount the first sound acquiring unit.

20. The camcorder as claimed in claim 19, wherein the guide boss and the guide groove include first and second terminals, respectively, to electrically contact each other.

21. The camcorder as claimed in claim 8, further comprises:
an internal sound acquiring unit provided inside the main body part, and having a non-directional microphone of omni-directionality.

22. The camcorder as claimed in claim 12, wherein the control section controls the camcorder so that simultaneously input of two different types of sound signals are prevented, to prevent an overlapping of the sound signals.

23. A camcorder, comprising:
a first sound acquiring unit having a first and second sound acquiring section;
a second sound acquiring unit having at least one sound acquiring section;
a control section provided in a main body part of the camcorder to output a control signal, which variably adjusts each signal level of sound signals acquired by the sound acquiring sections provided in the first sound acquiring unit, to the first sound acquiring unit, and to receive the sound signal adjusted by the control signal from the first sound acquiring unit, wherein
the first and second sound acquiring units are detachable from the main body part and an internal sound acquiring unit is provided inside the main body part.

24. The camcorder as claimed in claim 23, wherein the second sound acquiring unit comprises:
a first acquiring part having a higher receiving sensitivity with respect to a first direction than a second direction; and
a second acquiring part having a higher receiving sensitivity with respect to the second direction than the first direction.

25. The camcorder as claimed in claim 23, further comprising:
a zoom lens having a tele-position and wide-position, wherein the control section controls the sound signals of the first sound acquiring unit according to a driving position of the zoom lens.

26. The camcorder as claimed in claim 23, wherein the control section raises the signal level of the sound signals acquired from the first sound acquiring section, and lowers the signal level of the sound signals acquired from the second sound acquiring section, when the control signal is received by the first sound acquiring section of the first sound acquiring unit.

27. The camcorder as claimed in claim 23, wherein the control section raises the signal level of the sound signals acquired from the second sound acquiring section, and lowers the signal level of the sound signals acquired from the first sound acquiring section, when the control signal is received by the second sound acquiring section of the first sound acquiring unit.

28. The camcorder as claimed in claim 23, wherein the first sound acquiring section is a directional microphone, and the second sound acquiring section is a non-directional microphone.

29. The camcorder as claimed in claim 23, further comprising:
a switching section to selectively output the sound signals acquired by the first sound acquiring unit, the second sound acquiring unit, and the internal sound acquiring unit.

30. A camcorder having a plurality of sound acquiring units, comprising:
an external sound acquiring unit detachable from a main body part of the camcorder, and having a plurality sound acquiring sections;
an internal sound acquiring unit provided inside the main body part; and
a switching section to selectively output sound signals acquired by the external sound acquiring unit and the internal sound acquiring unit.

31. The camcorder as claimed in claim 30, wherein the switching section switches the internal sound acquiring unit off when acquiring sound signals from the external sound acquiring unit, minimizing noise produced when picking up sound signals through the internal sound acquiring unit.

32. The camcorder as claimed in claim 30, further comprising:
a control section to control the camcorder so that simultaneously input of two different types of sound signals are prevented, to prevent an overlapping of the sound signals.
